# EUROPÄISCHE PATENTSCHRIFT

(11) **EP 1 116 304 B1**
(45) Veröffentlichungstag und Bekanntmachung des Hinweises auf die Patenterteilung: **21.08.2002**
(21) Anmeldenummer: 99955803.4
(22) Anmeldetag: 22.09.1999
(51) Int. Cl.: H01R 13/53, H02G 15/06

(54) **T-FÖRMIGE VERBINDUNGSANSCHLÜSSE FÜR GASISOLIERTE MITTELSPANNUNGSSCHALTANLAGEN**
T-CONNECTORS FOR GAS-INSULATED MEDIUM-VOLTAGE SWITCHGEAR
RACCORDS EN T POUR DISPOSITIFS DE COMMUTATION MOYENNE TENSION AVEC ISOLATION DES GAZ

(30) Priorität: 22.09.1998 DE 19845776
(43) Veröffentlichungstag der Anmeldung: 18.07.2001
(73) Patentinhaber: SIEMENS AKTIENGESELLSCHAFT, 80333 München (DE)
(72) Erfinder: HARBECKE, Günter-Gustav, 63776 Mömbris (DE); HORNBACH, Markus, D-63073 Offenbach (DE); SPÄCK, Helmut, D-63739 Aschaffenburg (DE)
(86) Internationale Anmeldenummer: DE9903087
(87) Internationale Veröffentlichungsnummer: WO00017966

(56) Entgegenhaltungen:
- EP-A- 0 504 035
- WO-A-91/11040
- DE-U- 9 404 392

## Beschreibung

Die Erfindung bezieht sich auf einen T-förmigen Verbindungsanschluss für eine gasisolierte Mittelspannungsschaltanlage mit konusförmigen Anschlußelementen und einem steckbaren Kabelendverschluss sowie mit einer Durchführungsöffnung, wobei der T-förmige Verbindungsanschluss in Längsachsenrichtung der Durchführungsöffnung mit einer rückwärtig zu derselben spiegelbildlich verlaufenden Verlängerungsöffnung zur Aufnahme von spannungsfesten Verschlußstopfen versehen und annähernd rechtwinklig zu der Längsachsenrichtung mit einer Kabelend-Verschlußaufnahme ausgestattet ist, wobei der T-förmige Verbindungsanschluss durch einen einstückigen Universal-Systemanschlußadapter aus Elastomer-Isolierstoffen realisiert ist, und wobei die Durchführungsöffnung eine Adapter-Durchführungsaufnahme und die Verlängerungsöffnung eine Zusatz-Adapteraufnahme darstellt.

T-förmige Verbindungsanschlüsse der eingangs definierten Art sind aus DE 44 08 818 C1 bekannt. Die Kabelend-Verschlußaufnahmen sind hier in Verbindung mit Überspannungsableitern als komplett umgossene Kompakt-Baueinheiten konzipiert. Mit dieser Kompaktbauweise, also der konstruktiven Zusammenführung der an sich funktionell voneinander unabhängigen Kabelend-Verschlußaufnahmen mit den Überspannungsableitern, ist die Bautiefe der Kompakt-Baueinheit im Zusammenhang mit einem angeschlossenen Schaltanlagengerät verringert.
Dem gleichem Ziel dienen auch spezielle Adapter, wie sie u.a. aus der WO 91/11040 (EP 0 510 019 A1) bekannt sind. Hier sind die T-förmigen Adapter ebenfalls für den rechtwinkligen Anschluß von Kabel-Endverschlüssen in Verbindung mit dazu parallel angeordneten Überspannungsableitern für gasisolierte Schaltanlagen der Mittelspannungstechnik vorgesehen.

Die der Erfindung zugrunde liegende Aufgabe besteht darin, ein gegenüber den bekannten T-förmigen Verbindungsanschlüssen verbessertes Anschlußsystem zu definieren, mit dem sowohl die Vielfalt bezüglich der konstruktiven Gestaltungen der verschiedenen Verbindungsanschlüsse erheblich reduziert als auch der universelle Einsatz von standardisierten Verbindungselemente, insbesondere für gasisolierte Mittelspannungsschaltanlagen im Nennspannungsbereich bis zu 36 kV, ermöglicht ist.

Erfindungsgemäß wird dies durch die Merkmale
1.1 der Universal-Systemanschlußadapter ist zur Kabelendverschlußaufnahme hin konusförmig erweitert,
1.2 der Universal-Systemanschlußadapter ist mindestens im Bereich der Kabelend-Verschlußaufnahme mit einer durch Verschieben und/oder Umklappen veränderbaren Außenkontur versehen,
erreicht.

Mit der einheitlich geometrischen Ausgestaltung des T-förmigen Verbindungsanschlusses als einstückiger Universal-Systemanschlußadapter ist es möglich, konstruktiv unterschiedliche Verbindungselemente einzusetzen und miteinander zu kombinieren, ohne spezielle Sonderkonstruktionen für unterschiedliche Verbindungsanschlüsse einsetzen zu müssen. Darüber hinaus ist eine kostengünstige Adapterausbildung insgesamt erreicht. Der Universal-Systemanschlußadapter bietet für Kabelend-Verschlüsse, insbesondere für Massekabel von Mittelspannungsschaltanlagen mit Außenkonusdurchführungen, einfache Anschlußmöglichkeiten bei entsprechend einfacher Wartung. Diese einstückigen Universal-Systemanschlußadapter weisen keine äußeren Leitschichten auf, d. h., sie sind nicht abgesteuert, und trotzdem für den Anschluß von Massekabeln für Mittelspannungsschaltanlagen im Nennspannungsbereich bis 36 kV einsetzbar.
Mit der im Bereich der Kabelend-Verschlußaufnahme durch Verschieben und/oder Umklappen veränderbare Außenkontur sind vereinfachte Montageabläufe ermöglicht und darüber hinaus die Zugänglichkeit zum Prüfen und ggf. zum Zuführen von Kabeltränkmassen wesentlich vereinfacht.
Mit entsprechender Anpassung der Durchmesser der Kabelend-Verschlußaufnahmen lassen sich in einfacher Weise die handelsüblichen Kabel-Endverschlüsse - unabhängig von ihrer Ausführung als Kunststoff- oder Massekabel - unterbringen.

Gemäß einer vorteilhaften Ausgestaltung der Erfindung ist das Merkmal
2.1 der Universal-Systemanschlußadapter ist im Innenbereich der Adapter-Durchführungsaufnahme mit einer nach außen konkav gewölbten Steuerelektrode versehen,
vorgesehen.
Mit dem Einsatz derartiger Steuerelektroden sind die Spannungsfestigkeiten dieser Universal-Systemanschlußadapter im oberen Nennspannungsbereich der Mittelspannungsschaltanlagen auch für Kunststoffkabel sichergestellt.

Gemäß einer weiteren vorteilhaften Ausgestaltung der Erfindung ist das Merkmal
3.1 die Kabelend-Verschlußaufnahme ist im Bereich der freien Enden mit einer elastischen Dichtmanschette ausgestattet,
vorgesehen.
Mit der Dichtmanschette ist in besonders einfacher Weise die Kabelend-Verschlußaufnahme an die unterschiedlichen konventionellen Kabel-Endverschlüsse angepasst.

Eine weitere vorteilhafte Ausgestaltung der Erfindung sieht die Merkmale
4.1 die Kabelend-Verschlußaufnahme ist im Bereich der freien Enden mit einem Feldsteuerteil aus Elastomer-Isolierstoff ausgestattet,
4.2 das Feldsteuerteil ist mit einer umlaufenden Nut versehen,
vor.
Mit der Ausstattung der Kabelend-Verschlußaufnahmen mit diesen Feldsteuerteilen sind sehr kostengünstige Kabelend-Verschlüsse für Kunststoffkabel geschaffen, die mit ihrer umlaufenden Nut zur erheblichen Verbesserung der Spannungsfestigkeit der Universal-Systemanschlußadapter beitragen.
Die Kabelend-Verschlußaufnahmen sind somit für weite Querschnittsbereiche der Kabel einsetzbar. Bei entsprechender Anpassung können die Kabelend-Verschlüsse mit den gängigen Kabelschuhen ausgestattet sein.

Die Erfindung wird durch figürlich dargestellte Ausführungsbeispiele in vier Figuren näher erläutert, wobei
die Figur 1 den prinzipiellen Aufbau des Universal-Systemanschlußadapters zeigt,
die Figur 2 die in einer ersten Ausführungsform in den Universal-Systemanschlußadapter nach der Figur 1 eingesetzten externen Verbindungselemente ohne die Konturen des Universal-Systemanschlußadapters abbildet,
den Figuren 3.1 und 3.2 die in einer zweiten und dritten Ausführungsform in den Universal-Systemanschlußadapter nach der Figur 1 einfügbaren Kabelend-Verschlüsse für Massekabel in zwei verschiedenen Ausführungsformen zu entnehmen sind und
die Figur 4 die in einer vierten Ausführungsform an den Universal-Systemanschlußadapter nach der Figur 1 anschließbaren Kabel-Endverschluß ebenfalls ohne die Konturen des Universal-Systemanschlußadapters erkennen lässt.

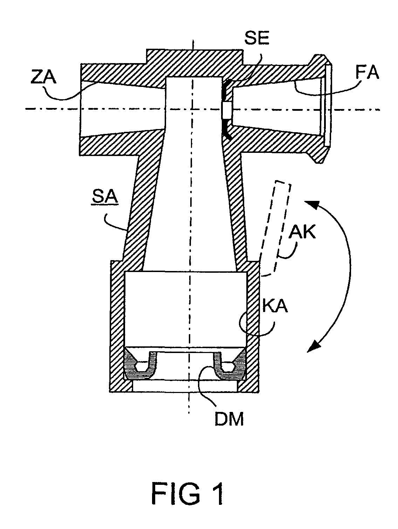

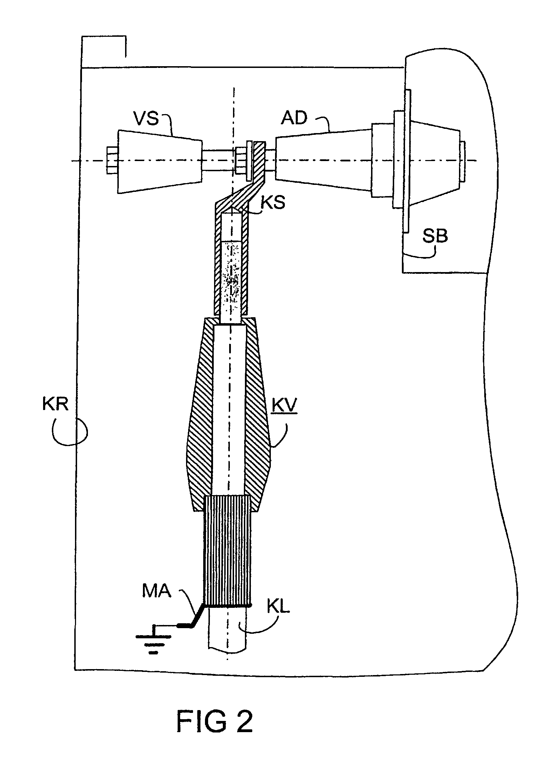

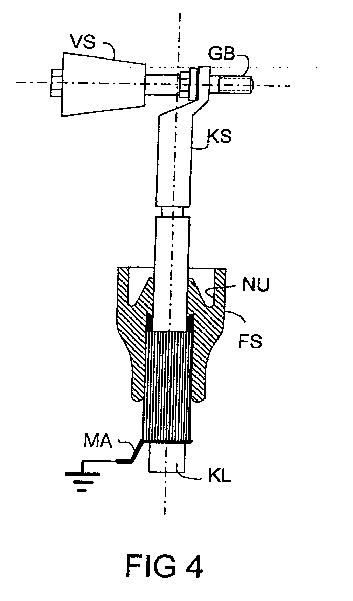

Die Figur 1 zeigt den Universal-Systemanschlußadapter SA, der im wesentlichen die Adapter-Durchführungsaufnahme FA, die in gleicher Mittelebene liegende, dahinter angeordnete Zusatz-Adapteraufnahme ZA und die zur Mittelebene annähernd rechtwinklig angeordnete Kabelend-Verschlußaufnahme KA aufweist. Der Universal-Systemanschlußadapter SA kann wahlweise mit einer Steuerelektrode SE zur Erhöhung der Spannungsfestigkeit, insbesondere in Verbindung mit Kabelend-Verschlüssen KV (Fig. 4) von Kunststoffkabeln, ausgestattet sein.
Des Weiteren kann im nach außen gerichteten Bereich der Kabelend-Verschlußaufnahme KA eine Dichtmanschette DM zur Anpassung an die unterschiedlichen Konturen der verschiedenartigen Kabel-Endverschlüsse KV (Fig.2) vorgesehen sein. Darüber hinaus ist die Außenkontur AK der Kabelend-Verschlußaufnahme KA durch Verschieben und/oder Umklappen veränderbar, wodurch die Zugänglichkeit, beispielsweise zum Prüfen der Kabel-Endverschlüsse KV (Fig. 2) und ggf. zum Nachfüllen von Kabeltränkmassen, erheblich erleichtert ist.

In der Figur 2 ist auszugsweise der Kabelanschlußraum KR einer Mittelspannungsschaltanlage angedeutet, in den durch die Schaltanlagenbehälterwand SB die Außenkonus-Durchführung AD zur Herstellung der Verbindungsanschlüsse hinein geführt ist.

Zur besseren Übersicht sind in dieser Figur 2 die Begrenzungskonturen des Universal-Systemanschlußadapters SA der Figur 1 nicht dargestellt, sondern lediglich die in der Adapter-Durchführungsaufnahme FA (Fig.1) befindliche Außenkonus-Durchführung AD, der in der Zusatz-Adapteraufnahme ZA (Fig.1) angeordnete Verschlußstopfen VS und der von der Kabelend-Verschlußaufnahme KA (Fig.1) aufgenommene Kabelschuh KS.
Der Kabelschuh KS, der praktisch den Endverschluß des Kabels KL bildet, stellt die elektrische Verbindung zu den elektrisch leitenden Bereichen der Außenkonus-Durchführung AD und des Verschlußstopfens VS her.
Das Kabel KL ist mit einer elektrisch leitenden Ummantelung versehen, die über den Masseanschluß MA zu Schutzzwecken mit einem auf Erdpotential liegenden Anschluß verbunden ist.

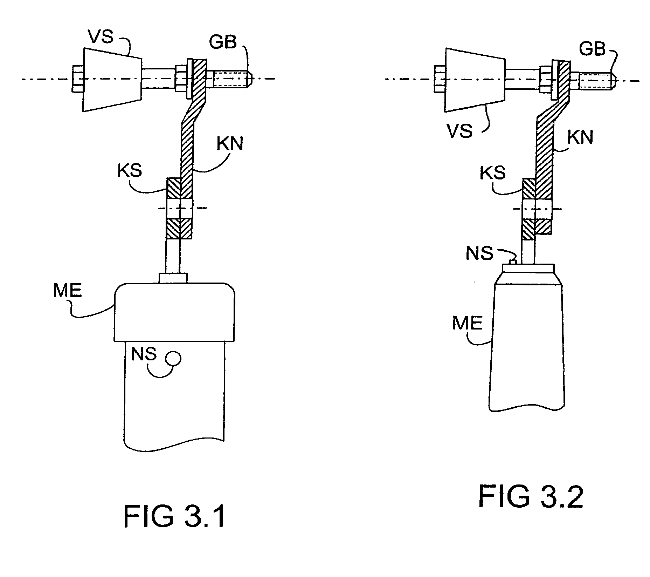

Die Figuren 3.1 und 3.2 zeigen ebenfalls zur besseren Übersicht nur die in dem Universal-Systemanschlußadapter SA der Figur 1 befindlichen leitenden Kabelschuhe KS mit den sich anschließenden Kabelanschlußstücken KN, die hier jeweils über den Gewindebolzen GB mit den hier ebenfalls nicht mehr dargestellten Außenkonus-Durchführungen verbunden sind. Auch in diesen Ausführungen sind die Zusatzadapter-Aufnahmen ZA (Fig. 1) jeweils mit dem Verschlußstopfen VS verschlossen. Des Weiteren ist erkennbar, daß sich die Massekabel-Endverschlüsse ME in ihrer äußeren Form unterscheiden, wobei der Massekabel-Endverschluß der Figur 3.1 u.a. den Nachfüllstutzen NS für die Tränkmasse am Umfang aufweist, während der Massekabel-Endverschluß der Figur 3.2 den Nachfüllstutzen NS im stirnseitigen Bereich enthält.

Der Figur 4 ist ein konventioneller Kabel-Endverschluß KV (Fig. 2) zu entnehmen, der innerhalb der in Figur 1 dargestellten Kabelend-Verschlußaufnahme KA zusätzlich das Feldsteuerteil FS enthält. Das Feldsteuerteil FS ist im Umfangsbereich des Kabels KL mit der umlaufenden Nut NU ausgestattet ist, mit der die Spannungsfestigkeit des Universal-Systemanschlußadapters SA (Figur 1) insgesamt verbessert ist. Der Kabel-Endverschluß KV (Fig. 2) des Kabels KL ist auch hier über den Kabelkontakt KK und das sich anschließende Kabelschuh KS durch den Gewindebolzen GB mit der nicht dargestellten Außenkonus-Durchführung AD (Figur2) elektrisch leitend verbunden.
Auch hier ist die in Figur 1 dargestellte Zusatz-Adapteraufnahme ZA mit dem Verschlußstopfen VS verschlossen, der in üblicher Weise durch sein Entfernen den Zugang zum Schraubkontakt mit dem Gewindebolzen GB freigibt.
Der Kabel-Endverschluß des Kabels KL ist ebenfalls mit dem Masseanschluß MA versehen, über den der Kabel-Endverschluß beim Anlegen einer Schutzerde berührungssicher wird.

Die T-förmigen Verbindungsanschlüsse stellen mit den standardisierten unterschiedlichen Aufnahmen ein kostengünstiges und konstruktiv einfaches Anschlußsystem für Mittelspannungsschaltanlagen dar.

## Patentansprüche

1. T-förmiger Verbindungsanschluss für eine gasisolierte Mittelspannungsschaltanlage mit konusförmigen Anschlußelementen und einem steckbaren Kabelendverschluss sowie mit einer Durchführungsöffnung, wobei der T-förmige Verbindungsanschluss in Längsachsenrichtung der Durchführungsöffnung mit einer rückwärtig zu derselben spiegelbildlich verlaufenden Verlängerungsöffnung zur Aufnahme von spannungsfesten Verschlußstopfen versehen und annähernd rechtwinklig zu der Längsachsenrichtung mit einer Kabelend-Verschlußaufnahme (KA) ausgestattet ist, wobei der T-förmige Verbindungsanschluss durch einen einstückigen Universal-Systemanschlußadapter (SA) aus E-lastomer-Isolierstoffen realisiert ist, und wobei die Durchführungsöffnung eine Adapter-Durchführungsaufnahme (FA) und die Verlängerungsöffnung eine Zusatz-Adapteraufnahme (ZA) darstellt,
**gekennzeichnet durch** die Merkmale
1.1 der Universal-Systemanschlußadapter (SA) ist zur Kabelend-Verschlußaufnahme (KA) hin konusförmig erweitert,
1.2 der Universal-Systemanschlußadapter (SA) ist mindestens im Bereich der Kabelend-Verschlußaufnahme (KA) mit einer **durch** Verschieben und/oder Umklappen veränderbaren Außenkontur (AK) versehen.

2. T-förmiger Verbindungsanschluss nach Patentanspruch 1,
**gekennzeichnet durch** das Merkmal
2.1 der Universal-Systemanschlußadapter (SA) ist im Innenbereich der Adapter-Durchführungsaufnahme (FA) mit einer nach außen konkav gewölbten Steuerelektrode (SE) versehen.

3. T-förmiger Verbindungsanschluss nach Patentanspruch 1 oder 2,
**gekennzeichnet durch** das Merkmal
3.1 die Kabelend-Verschlußaufnahme (KA) ist im Bereich der freien Enden mit einer elastischen Dichtmanschette (DM) ausgestattet.

4. T-förmiger Verbindungsanschluss nach Patentanspruch 1 oder einem der vorangegangenen Patentansprüche 2 und 3,
**gekennzeichnet durch** die Merkmale
4.1 die Kabelend-Verschlußaufnahme (KA) ist im Bereich der freien Enden mit einem Feldsteuerteil (FS) aus Elastomer-Isolierstoff ausgestattet,
4.2 das Feldsteuerteil (FS) ist mit einer umlaufenden Nut (NU) versehen.

## Claims

1. T-shaped connection for a gas-insulated medium-voltage switchgear assembly with conical connecting elements and a plug-in- cable termination, and with a bushing opening, with the T-shaped connection being provided in the longitudinal axis direction of the bushing opening with an extension opening which runs rearward with respect thereto in mirror-image form, for holding voltage-resistant blanking plugs, and being equipped with a cable termination holder (KA) approximately at right angles to the longitudinal axis direction, and with the T-shaped connection being provided by an integral universal system connecting adapter (SA) composed of elastomer insulating materials, and with the bushing opening representing an adapter bushing holder (FA) and the extension opening representing an additional adapter holder (ZA),
**characterized by** the following features:
1.1 the universal system connecting adapter (SA) is widened in a conical shape towards the cable termination holder (KA), and
1.2 the universal system connecting adapter (SA) is provided, at least in the region of the cable termination holder (KA), with an external contour (AK) which can be varied by pushing and/or folding around.

2. T-shaped connection according to Patent Claim 1,
**characterized by** the following feature:
2.1 a universal system connecting adapter (SA) is provided, in the internal region of the adapter bushing holder (FA), with a control electrode (SE) which is curved in a concave shape outwards.

3. T-shaped connection according to Patent Claim 1 or 2,
**characterized by** the following feature:
3.1 the cable termination holder (KA) is equipped, in the region of the free ends, with an elastic sealing collar (DM).

4. T-shaped connection according to Patent Claim 1 or one of the preceding Patent Claims 2 and 3,
**characterized by** the following features:
4.1 the cable termination holder (KA) is equipped, in the region of the free ends, with a field control part (FS) composed of elastomer insulating material, and
4.2 the field control part (FS) is provided with a circumferential groove (NU).

## Revendications

1. Raccord en forme de T pour dispositif de commutation moyenne tension à isolation par du gaz ayant des éléments de raccord de forme conique et une boîte d'extrémité de câble qui peut être enfichée ainsi qu'une ouverture de traversée, le raccord en forme de T étant muni dans la direction axiale longitudinale de l'ouverture de traversée d'une ouverture de prolongement, s'étendant vers l'arrière en étant symétrique à elle-même comme en un miroir, de réception de tampons de fermeture résistant à la traction et munie à peu près à angle droit par rapport à la direction de l'axe longitudinal d'un logement (KA) de la boîte d'extrémité de câble, dans lequel le raccord en forme de T est réalisé par un adaptateur (SA) de raccordement de système universel d'une seule pièce en une matière isolante élastomère et dans lequel l'ouverture de traversée représente un logement (FA) de traversée de l'adaptateur et l'ouverture de prolongement un logement (ZA) supplémentaire de l'adaptateur, **caractérisé par** les caractéristiques
1.1 l'adaptateur (SA) de raccord de système universel est élargi en forme de cône vers le logement (KA) de la boîte d'extrémité de câble,
1.2 l'adaptateur (SA) de raccord de système universel est, au moins dans la région du logement (KA) de la boîte d'extrémité de câble, muni d'un contour (AK) extérieur pouvant être modifié par coulissement et/ou par rabattement.

2. Raccord en forme de T suivant la revendication 1, **caractérisé par** la caractéristique
2.1 l'adaptateur (SA) de raccord de système universel est muni dans la partie intérieure du logement (FA) de traversée de l'adaptateur d'une électrode (SE) de commande tournant sa concavité vers l'extérieur.

3. Raccord en forme de T suivant la revendication 1 ou 2, **caractérisé par** la caractéristique
3.1 le logement (KA) de la boîte d'extrémité de câble est muni dans la région des extrémités libres d'une manchette (DM) élastique d'étanchéité.

4. Raccord en forme de T suivant la revendication 1 ou l'une des revendications précédentes 2 et 3, **caractérisé par** la caractéristique
4.1 le logement (KA) de boîte d'extrémité de câble est muni dans la partie des extrémités libres d'une partie (FS) de commande de champ en matière isolante élastomère,
4.2 la partie (FS) de commande de champ est munie d'une gorge (NU) faisant le tour.
